# EUROPÄISCHE PATENTSCHRIFT

(11) **EP 1 341 158 B1**
(45) Veröffentlichungstag und Bekanntmachung des Hinweises auf die Patenterteilung: **04.07.2007**
(21) Anmeldenummer: 03002667.8
(22) Anmeldetag: 11.02.2003
(51) Int. Cl.: G10L 15/26, F24C 15/20

(54) **Sprachgesteuertes elektrisches Gerät, insbesondere Dunstabzugshaube**
Voice-controlled electric appliance, in particular fume exhausting hood
Appareil électrique contrôlé par la parole, particulièrement hotte d'aspiration

(30) Priorität: 27.02.2002 DE 10208469
(43) Veröffentlichungstag der Anmeldung: 03.09.2003
(73) Patentinhaber: BSH Bosch und Siemens Hausgeräte GmbH, 81739 München (DE)
(72) Erfinder: Maase, Jens, 93053 Regensburg (DE)

(56) Entgegenhaltungen:
- EP-A- 0 847 003
- EP-A- 0 999 542
- EP-A- 1 065 652
- EP-A- 1 085 781
- DE-A- 19 860 261
- DE-U- 29 919 452
- JP-A- 7 210 191
- US-A- 4 426 733
- US-A- 5 406 073
- US-B1- 6 243 683
- JOURNAL ARTICLE: 'METHOD TO PACE USER INPUT FOR SPEECH RECOGNITION SYSTEMS' IBM TECHNICAL DISCLOSURE BULLETIN Bd. 37, Nr. 10, 01 Oktober 1994, IBM CORP. NEW YORK, US, Seiten 575 - 577, XP000475783

## Beschreibung

Die Erfindung bezieht sich auf ein elektrisches Haushaltgerät, insbesondere eine Dunstabzugshaube, mit einer ein Mikrofon aufweisenden Spracheingabeeinheit.

Aus der WO 01/59763 A1 ist ein Elektrogerät mit einer Spracheingabeeinheit bekannt. Der Spracheingabeeinheit ist eine Sprachverarbeitungseinheit nachgeordnet, die aus gesprochenen Eingabebefehlen Steuersignale ableitet zum Steuern von Funktionen des Haushaltgerätes. Es ist eine Betriebsstatus-Erkennungseinheit vorgesehen, die den Betriebsstatus des Haushaltgerätes oder anderer Geräuschquellen erkennt und an die Sprachverarbeitungseinheit meldet. Die Sprachverarbeitungseinheit nimmt eine Störgeräuschkorrektur nur dann vor, wenn eine Geräuschquelle eingeschaltet ist. Das bekannte Verfahren zur Spracheingabe mit Korrektur von Störsignalen ist dadurch gekennzeichnet, dass bei Spracheingabe zur Steuerung eines Gerätes der Betriebsstatus zumindest einer die Spracheingabe störenden Geräuschquelle abgefragt wird und dass die Sprachverarbeitungseinheit eine Störgeräuschkorrektur nur vornimmt, wenn eine Geräuschquelle eingeschaltet ist. Es wird also, wenn der Sprachverarbeitungseinheit ein Sprachsignal zur Erkennung vorgelegt wird, nicht versucht, in jedem Fall eine Störgeräuschkorrektur vorzunehmen. Dies führt in all den Fällen zu einer Verbesserung der Spracherkennung, in denen das Sprachsignal gar nicht durch Störgeräusche belastet ist. Denn durch den Versuch, ein nicht vorhandenes Störgeräusch aus dem Sprachsignal zu entfernen oder korrigierend zu berücksichtigen, wird die Qualität des Sprachsignals verringert.

Aus US 6,243,683 B1 ist ein Kamerasystem mit einer Gestenerkennung und einer Spracherkennung bekannt. Gemäß US 6,243,683 B1 wird die Spracherkennung durch Gesten eines Benutzers ein- bzw. ausgeschaltet.

Aus US 4,426,733 ist ein Radiofrequenz-Sende- und Empfangsgerät bekannt, das mittels Spracheingabe bedient werden kann. Einer Spracherkennungseinheit ist hier eine Steuereinheit vorgeschaltet, wobei diese Steuereinheit die Funktion des Radiofrequenz-Sende- und Empfangsgeräteschaltkreises abhängig von einem Steuersignal der Spracherkennungseinheit steuert.

Aus EP 1 065 652 A1 ist eine sprachbasierte Bedientechnik mit einer Spracherkennungseinheit bekannt, bei der ein Signalton ausgegeben wird, um den Anwender zur Spracheingabe aufzufordern. Wenn der Anwender die gewünschten Wörter als Antwort auf den Signalton äußert, identifiziert die Spracherkennungseinheit den Begin dieser Sprachsignale und es wird ein Verfahrenstimer aktiviert, so dass die Spracherkennung der geäußerten Sprachsignale innerhalb von 2,5 Sekunden erfolgt.

Aus EP 0 847 003 A2 ist ein Toneingabe- , Tonausgabe - und Speichersystem mit einer Spracheingabe und Spracherkennung bekannt, bei dem die Spracheingabe bzw Spracherkennung beispielsweise durch Betätigung einer Taste gestattet wird. Die Spracherkennungseinheit wartet auf ein gültiges Sprach-Kommando, um einen Speicherprozess zu starten. Wenn der Speicherprozess gestartet ist, wird ein Signal ausgegeben, um dem Benutzer zu signalisieren, dass er zu sprechen beginnen kann. Ein voreingestellter Timer oder Zähler wird gestartet, sobald Sprachsignale aufgenommen werden. Die Spracheingabe wird gestoppt, sobald der Timer oder Zähler abgelaufen ist.

Es ist die Aufgabe der Erfindung, eine Vorrichtung zu schaffen, mit der aufgrund anderer Daten eine Verbesserung bei der Aufnahme von Sprachsignalen im Haushaltsbereich erreicht wird.

Bei einem elektrischen Haushaltgerät der eingangs genannten Art wird diese Aufgabe durch die Merkmale des Vorrichtungsanspruchs 1 oder durch die Merkmale des Verfahrensanspruchs 9 gelöst.

Durch den Eingriff des Bewegungsmelders wird eine fehlerhafte Benutzung der Spracheingabeeinheit stark verringert.

Beim Einsatz von Sprachbedieneinheiten ist nämlich die technisch erreichbare Sicherheit der Erkennung von Befehlen je nach Typ der Sprachbedieneinheit unterschiedlich, wird jedoch von den Herstellern bestenfalls mit 95 % angegeben. Dies bedeutet, dass die Häufigkeit des Nichterkennens oder des falschen Erkennens eines Befehls unter Idealbedingungen bei 5 % liegt. Dieser Wert vergrößert sich noch durch Fremdgeräusche und andere Einflussquellen, wie zum Beispiel Hall, Reflexionen im Raum oder ein eingeschaltetes Radio, usw. Aufgrund dieser Bedingungen lassen sich Sprachsteuerungssysteme in sicherheitsrelevanten Anwendungen nicht einsetzen. Gerade hier schafft die Erfindung Abhilfe, indem sie einen ganz anderen Weg zur Gewöhnung von Informationen beschreitet. Durch die Kombination eines Bewegungsmelders mit der Spracheingabeeinheit wird erreicht, dass die Sprachauswerteeinheit nur dann aktiv wird, wenn sowohl eine Bewegung eines eine Infrarot-Strahlung emittierenden Körpers als auch ein Sprachsignal vorhanden ist.

Dadurch, dass ein Bewegungsmelder zum Einsatz kommt, wird ausgeschlossen, dass das Einschalten eines Infrarotstrahlung aussendenden Körpers, beispielsweise einer Glühlampe unter der Decke des Raums, das Mikrofon aktiviert und dieses dann unerwünschte Signale aufnimmt und fehlerhaft das Haushaltgerät einschaltet oder ausschaltet.

Andererseits kann ein Gegenstand, der sich in dem Raum bewegt, beispielsweise ein von einem Kind geworfener Ball, die Sprachbedieneinheit nicht einschalten, weil der Sensor in einer vorteilhaften Weiterbildung der Erfindung gleichzeitig neben dem Bewegungssignal das Vorhandensein einer Infrarot-Quelle erwartet. Somit kann nur ein Mensch über den Sensor das Mikrofon der Sprachbedieneinheit einschalten und anschließend mit Sprachsignalen das Gerät steuern.

In vorteilhafter Weise ist der Bewegungsmelder ein auf Signaländerungen reagierender Sensor.

Erfindungsgemäß wird durch den Bewegungsmelder ein Timer aktiviert, durch den das Mikrofon für eine vorgewählte Einschaltdauer eingeschaltet wird. Das Mikrofon erwartet also innerhalb einer bestimmten Zeit, nachdem es aktiviert wurde, dass ein Sprachbefehl eingegeben wird. Nur wenn die Kombination von Bewegung eines Menschen und anschließend der Eingabe eines Sprachbefehls vorliegt, wird die Sprachbedieneinheit betätigt. Dadurch kann auch ein unwillkürliches Einschalten des Mikrofons nicht zu einer Fehlbedienung führen, weil stets die Kombination von Bewegung und Sprache erwartet wird, um das Haushaltgerät über die Sprachbedieneinheit zu steuern.

Besonders geeignet ist ein Sensor, der eine Richtcharakteristik für die von ihm selektierte Strahlung, insbesondere die Infrarotstrahlung, aufweist. Aufgrund einer derartigen Richtcharakteristik wird erreicht, dass der Sensor die Einschaltung des Mikrofons nur dann bewirkt, wenn die Infrarot- oder die eine andere Strahlung aussendende Quelle innerhalb eines bestimmten Raumbereichs erscheint. Somit lässt die Aktivierung des Mikrofons auf das Vorhandensein von erwachsenen Personen beschränken, die aufgrund ihrer Körpergröße in den Erfassungsbereich des Sensors hineingelangen, während Kinder aufgrund ihrer geringeren Größe den Sensor nicht auslösen können.

Besonders geeignet ist eine Vorrichtung, die zusätzlich noch ein Bilderfassungssystem aufweist, beispielsweise eine Kamera oder ein CCD-Array, das bestimmte Personen erkennt und das eingeschaltet wird, wenn der Bewegungsmelder, insbesondere der lnfrarotsignal-Empfänger, eine bewegte und Infrarotsignale emittierende Quelle feststellt.

In einer Weiterbildung der Erfindung ist dem Mikrofon ein Stimm- oder Spracherkenner zugeordnet, der die Sprachauswerteeinheit nur dann aktiviert, wenn ein in dem Stimm- oder Spracherkenner gespeichertes Sprachspektrum durch diesen erkennbar wird.

Durch die Erfindung wird auch ein Verfahren zum Einschalten eines Haushaltsgerätes, insbesondere einer Dunstabzugshaube, mit einem Mikrofon geschaffen, bei dem ein Bewegungsmelder eine Bewegung einer Person oder eines Gegenstands detektiert, aufgrund deren das Mikrofon in Folge eines in dem Bewegungsmelder erzeugten Ausgangssignals für eine vorgebbare Zeit eingeschaltet wird.

In einer Weiterbildung dieses Verfahrens werden von dem Mikrofon aufgenommene Sprach- oder Stimmsignale analysiert und nur im Fall der Erkennung einer Stimme an eine Sprachsteuereinheit weitergeleitet eine Funktion des Haushaltgerätes aktiviert.

Weitere vorteilhafte Ausbildungen der Erfindung ergäben sich aus der nachfolgenden Beschreibung.

Die Erfindung wird in einem Ausführungsbeispiel und der Zeichnungen näher erläutert. Diese zeigen:
- Figur 1: eine Anordnung aus einer Dunstabzugshaube und einem Kochfeld in perspektivischer Darstellung,
- Figur 2: ein vereinfachtes Blockdiagramm der wesentlichen Komponenten der Sprachbedieneinheit, und
- Figur 3: die Funktionsweise des Bewegungssensors.

Ein Kochfeld 1 ist in einem Ausschnitt einer Arbeitsplatte 2 montiert. Auf einer Kochfeldplatte 3, die insbesondere aus Glaskeramik ist, sind verschiedene Kochzonen 4 markiert. Entsprechend den Eingaben über eine Bedien- und Anzeigeeinheit 5 des Kochfeldes 1 können in an sich bekannter Weise von unterhalb der Kochfeldplatte 3 angeordneten Heizelementen über eine Steuereinheit auf den Kochzonen 4 abgestellte (hier nicht dargestellte) Kochgefäße beheizt werden. Dabei ist die Bedien- und Anzeigeeinheit 5 aus Bequemlichkeits- und Sicherheitsgründen vorhanden. Sie lässt sich auf ein sicherheitstechnisch vorgeschriebenes Minimum reduzieren, bei der die Gesamtanordnung auch über eine Sprachbedieneinheit 6 verfügt, wie nachfolgend beschrieben ist.

In dem Kochfeld 1 ist weiterhin eine Sende- und Empfangseinheit 7 vorgesehen, die über eine drahtlos arbeitende Übertragungsstrecke 8 in an sich bekannter Weise mit einer oberhalb des Kochfeldes 1 angeordneten Dunstabzugshaube 9 kommuniziert. Die Übertragungsstrecke 8 kann dabei beispielsweise als Funkstrecke realisiert sein. Zur Kommunikation mit dem Kochfeld 1 verfügt die Dunstabzugshaube 9 über eine Sende- und Empfangseinheit 10. Ebenso weist die Dunstabzugshaube 9 Bedien- und Anzeigeelemente 11 auf, über die Funktionen der Dunstabzugshaube 9 betätigt bzw. angezeigt werden. Um eine Spracheingabe zu ermöglichen, weist die Sprachbedieneinheit 6 ein Mikrofon 12 auf, das räumlich hinter einem optischen Sensor 13 angeordnet ist. Der Sensor 13 ist als Bewegungssensor ausgebildet und reagiert auf bewegliche Infrarotquellen. Wenn der Sensor 13 eine derartige bewegliche Infrarotquelle, also eine menschliche Person, detektiert hat, schaltet er das Mikrofon 12 ein. Von dem Mikrofon 12 aufgenommene Signale werden einem Spracherkenner 14 zugeführt. Dieser steht mit einer Sprachauswerteeinheit 15 in Verbindung, die aus dem empfangenen Sprachsignal ein Signal zur Steuerung der Dunstabzugshaube 9 und/oder des Kochfeldes 1 ableitet. In letzterem Fall wird dieses Signal über die Übertragungsstrecke 8 zu dem Kochfeld 1 übertragen.

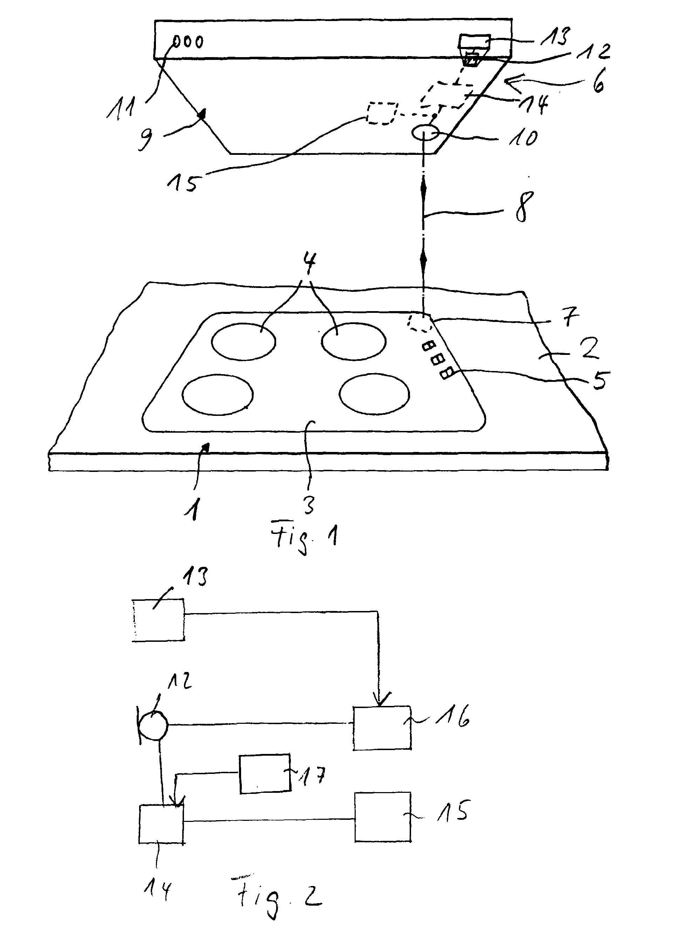

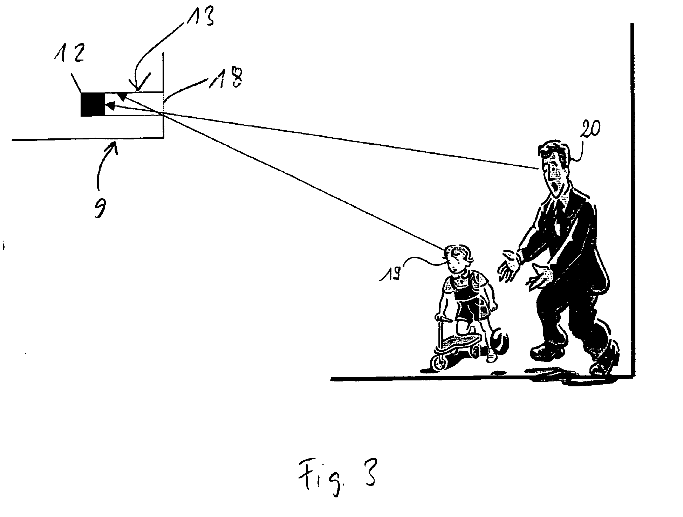

Nachstehend wird die Funktionsweise der Sprachbedieneinheit anhand des Blockschaltbildes (Figur 2) erläutert. Der optische Sensor 13 erzeugt, wenn er eine bewegte Wärmequelle detektiert hat, ein Ausgangssignal für einen Timer 16. Dieser schaltet das Mikrofon für eine vorgegebene oder mittels der Bedienelemente 11 vorgebbare Zeitdauer ein, so dass es Sprachsignale aufnimmt. Das Mikrofon 12 gibt die Sprachsignale an den Spracherkenner 14 weiter, der überprüft, ob eine für die Vergabe von Befehlen anwesende, kompetente Person vorhanden ist, oder ob es sich um einen Fremden handelt. Hierzu sind in einem dem Spracherkenner 14 zugeordneten Speicher 17 Sprachmuster derjenigen Personen abgespeichert, die als Bedienungspersonen für die Bedienung der Sprachbedieneinheit 6 in Betracht kommen. Wenn durch den Spracherkenner 14 eine derartige Person erkannt werden konnte, werden die Sprachsignale an die Sprachauswerteeinheit 15 weitergeleitet, in der dann das geeignete Signal erzeugt wird, um die Dunstabzugshaube 9 und/oder die Kochstelle 1 zu betätigen.

Der optische Sensor 13 (Figur 3) ist hinter einer Blende 18 angeordnet, die dafür sorgt, dass der Sensor 13 die gewünschte Richtcharakteristik hat. Durch den Abstand des Sensors 13 von der Blende 18 wird die Größe des Erfassungsbereichs eingestellt. Durch die Blende 18 wird erreicht, dass das von einem Kind 19 emittierte infrarote Licht nicht mehr von dem Sensor 13 erfasst wird, während das von einer erwachsenen Person 20 erzeugte infrarote Licht durch die Blende 18 hindurch auf eine empfindliche Fläche des Sensors 13 gelangt und dadurch den Timer 16 aktiviert. Für eine bestimmte Zeitdauer ist dann Mikrofon 12 für die Aufnahme von Sprachsignalen aktiviert.

Bevorzugt ist auch die Blende 18 verstellbar angeordnet, um sie der Größe in Betracht kommender Bedienungspersonen sowie der gewünschten Raumrichtungen aus denen Signale empfangen werden sollen, anzupassen.

Allgemein gilt, dass die Geometrie des Sensors 13 variabel gestaltet werden kann, damit über die Blende 18 der Erfassungswinkel und über ein Gelenk der Erfassungsbereich variiert werden können.

Durch den Eingriff des Timers 16 wird eine Zeitsteuerung erreicht, durch die der Einfluss von Störgrößen stark unterbunden wird. Nicht im Bereich des Sensors 13 liegende Störquellen werden komplett unterdrückt. Durch den Spracherkenner 14 erfolgt eine Überprüfung, ob das akustische Signal von einer "lebenden" Quelle stammen kann. Eine Fehlbedienung durch Kinder wird weitgehend eingeschränkt oder sogar ausgeschlossen. Gemäß der Erfindung kann von der Annahme ausgegangen werden, dass sich eine reale "Befehlsquelle", d.h. ein Bediener, im Raum befindet. Dadurch ist es möglich, eine Sprachbedienung auch für sicherheitsrelevante Systeme wie Herde und Öfen einzusetzen, da die Befehle durch die anwesende, kompetente Person überprüft werden. Ein unbeabsichtigtes Auslösen des Systems kann weitgehend unterbunden werden.

## Patentansprüche

1. Elektrisches Haushaltgerät, insbesondere Dunstabzugshaube (9), mit einem zugeordneten Bewegungsmelder (13), mit einer ein Mikrofon (12) aufweisenden Sprachbedieneinheit (6), wobei das Mikrofon (12) nur bei Erhalt eines Signals des Bewegungsmelders (13) eingeschaltet wird, **dadurch gekennzeichnet, dass** durch das Signal des Bewegungsmelders (13) ein Timer (16) aktiviert wird, durch den das Mikrofon (12) für eine vorgegebene Einschaltdauer eingeschaltet wird, und dass die Einschaltdauer des Mikrofons (12) vorgebbar ist.

2. Haushaltgerät nach Anspruch 1, **dadurch gekennzeichnet, dass** der Bewegungsmelder ein Infrarotsignal-Empfänger (13) ist.

3. Haushaltgerät nach Anspruch 1 oder 2, **dadurch gekennzeichnet, dass** der Bewegungsmelder (13) ein auf Signaländerungen reagierender Sensor ist.

4. Haushaltgerät nach einem der Ansprüche 1 bis 3, **dadurch gekennzeichnet, dass** der Bewegungsmelder (13) eine Richtcharakteristik hat, durch die der von dem Bewegungsmelder (13) detektierbare Raumbereich begrenzt ist.

5. Haushaltgerät nach Anspruch 4, **dadurch gekennzeichnet, dass** der vom dem Bewegungsmelder (13) detektierbare Raumbereich oberhalb einer vorgegebenen Höhe liegt.

6. Haushaltgerät nach Anspruch 4 oder 5, **dadurch gekennzeichnet, dass** der Sensor (13) eine Blende (18) umfasst, durch die die Infrarot-Strahlung zu dem Sensor (13) hindurchgelassen wird.

7. Haushaltgerät nach einem der Ansprüche 1 bis 6, **dadurch gekennzeichnet, dass** dem Mikrofon(12) ein Stimm- oder Spracherkenner (14) zugeordnet ist und dass eine Sprachauswerteeinheit (15) nur dann aktiviert wird, wenn durch den Stimm- oder Spracherkenner (14) ein gespeichertes Sprachspektrum erkannt wird.

8. Haushaltgerät nach einem der Ansprüche 1 bis 7, **dadurch gekennzeichnet, dass** die Sprachbedieneinheit (6) in dem Haushaltsgerät (9) integriert ist.

9. Verfahren zum Betreiben eines Haushaltgeräts, insbesondere einer Dunstabzugshaube (9), mit einem zugeordneten Bewegungsmelder (13), mit einer ein Mikrofon (12) aufweisenden Sprachbedieneinheit (6) wobei die Einschaltdauer des Mikrofons (12) vorgegeben wird, der Bewegungsmelder (13) eine Bewegung einer Person oder eines Gegenstands detektiert, das Mikrofon (12) aufgrund eines von dem Bewegungsmelder (13) erzeugten Ausgangssignals für die vorgegebene Zeitdauer eingeschaltet wird, von dem Mikrofon (12) aufgenommene Sprach- oder Stimmsignale analysiert werden und nur im Fall der Erkennung einer Stimme an eine Sprachauswerteeinheit (15) weitergeleitet wird und eine Funktion des Haushaltgeräts aktiviert wird.

## Claims

1. Electric domestic appliance, particularly fume extractor hood (9), with an associated movement reporting device (13), with a speech control unit (6) having a microphone (12), wherein the microphone (12) is switched on only on receipt of a signal of the movement reporting device (13), **characterised in that** a timer (16) by which the microphone (12) is switched on for a predetermined switch-on period is activated by the signal of the movement reporting device (13) and that the switch-on period of the microphone (12) is predeterminable.

2. Domestic appliance according to claim 1, **characterised in that** the movement reporting device is an infrared signal receiver (13).

3. Domestic appliance according to claim 1 or 2, **characterised in that** the movement reporting device (13) is a sensor reacting to signal changes.

4. Domestic appliance according to one of claims 1 to 3, **characterised in that** the movement reporting device (13) has a directional characteristic by which the spatial region detectable by the movement reporting device (13) is confined.

5. Domestic appliance according to claim 4, **characterised in that** the spatial region detectable by the movement reporting device (13) lies above a predetermined height.

6. Domestic appliance according to claim 4 or 5, **characterised in that** the sensor (13) comprises an aperture (18) through which the infrared radiation passes to the sensor (13).

7. Domestic appliance according to one of claims 1 to 6, **characterised in that** a voice or speech recognition device (14) is associated with the microphone (12) and that a speech evaluating unit (15) is activated only when a stored speech spectrum is recognised by the voice or speech recognition device (14).

8. Domestic appliance according to one of claims 1 to 7, **characterised in that** the speech control unit (6) is integrated in the domestic appliance (9).

9. Method of operating a domestic appliance, particularly a fume extractor hood (9), with an associated movement reporting device (13), with a speech control unit (6) comprising a microphone (12), wherein the switch-on period of the microphone (12) is predetermined, the movement reporting device (13) detects a movement of a person or an object, the microphone (12) is switched on for the predetermined time period by way of an output signal generated by the movement reporting device (13), speech or voice signals received by the microphone (12) are analysed and only in the case of recognition of a voice are they passed on to a speech evaluating unit (15) and a function of the domestic appliance is activated.

## Revendications

1. Appareil ménager électrique, en particulier hotte d'aspiration (9), avec un détecteur de mouvement (13) associé, avec une unité de commande vocale (6) présentant un microphone (12), le microphone (12) étant enclenché seulement à la réception d'un signal du détecteur de mouvement (13), **caractérisé en ce qu'**une minuterie (16) est activée par le signal du détecteur de mouvement (13), minuterie par laquelle le microphone (12) est enclenché pour une durée d'enclenchement prédéfinie, et **en ce que** la durée d'enclenchement du microphone (12) peut être prédéfinie.

2. Appareil ménager selon la revendication 1, **caractérisé en ce que** le détecteur de mouvement est un récepteur de signal infrarouge (13).

3. Appareil ménager selon la revendication 1 ou 2, **caractérisé en ce que** le détecteur de mouvement (13) est un capteur réagissant à des variations de signal.

4. Appareil ménager selon l'une quelconque des revendications 1 à 3, **caractérisé en ce que** le détecteur de mouvement (13) a une caractéristique directive par laquelle la zone d'espace pouvant être détectée par le détecteur de mouvement (13) est limitée.

5. Appareil ménager selon la revendication 4, **caractérisé en ce que** la zone d'espace détectable du détecteur de mouvement (13) est située au-dessus d'un niveau prédéfini.

6. Détecteur de mouvement selon la revendication 4 ou 5, **caractérisé en ce que** le capteur (13) comprend un interrupteur (18), par lequel passe le rayonnement infrarouge allant au capteur (13).

7. Appareil ménager selon l'une quelconque des revendications 1 à 6, **caractérisé en ce qu'**un identificateur de voix ou de parole (14) est attribué au microphone (12) et **en ce qu'**une unité d'analyse de parole (15) n'est activée que dans les cas où un spectre de parole mémorisé est reconnu par l'identificateur de voix ou de parole (14).

8. Appareil ménager selon l'une quelconque des revendications 1 à 7, **caractérisé en ce que** l'unité à commande vocale (6) est intégrée dans l'appareil ménager (9).

9. Procédé pour l'exploitation d'un appareil ménager, en particulier d'une hotte d'aspiration (9), avec un détecteur de mouvement (13) associé, avec une unité à commande vocale (6) présentant un microphone, la durée d'enclenchement du microphone (12) étant prédéfinie, le détecteur de mouvement (13) détectant un mouvement d'une personne ou d'un objet, le microphone (12) étant enclenché sur la base d'un signal de sortie généré par le détecteur de mouvement (13) pour la durée prédéfinie, des signaux de parole ou de voix enregistrés par le microphone (12) étant analysés et transmis à une unité d'analyse de parole (15) seulement dans le cas d'une reconnaissance d'une voix et une fonction de l'appareil ménager étant activée.
